# EUROPEAN PATENT SPECIFICATION

(11) **EP 1 571 588 B1**
(45) Date of publication and mention of the grant of the patent: **01.08.2007**
(21) Application number: 05003916.3
(22) Date of filing: 23.02.2005
(51) Int. Cl.: G06K 15/00, G06F 17/00, G06F 3/12, G06T 11/60, G06F 17/21, G06F 9/44, G06F 3/033

(54) **Print data editing apparatus and method**
Vorrichtung und Verfahren zum Editieren von Druckdaten
Procédé et apparail pour l'édition de données d'impression

(30) Priority: 05.03.2004 JP 2004062050
(43) Date of publication of application: 07.09.2005
(73) Proprietor: Brother Kogyo Kabushiki Kaisha, Nagoya-shi, Aichi-ken 467-8561 (JP)
(72) Inventor: Tanaka, Motonori c/o Brother Kogyo K.K., Nagoya-shi Aichi-ken 467-8562 (JP); Nose, Tetsuya c/o Brother Kogyo K. K., Nagoya-shi Aichi-ken 467-8562 (JP); Iwanaga, Kazuhiko c/o Brother Kogyo K. K., Nagoya-shi Aichi-ken 467-8562 (JP); Fujita, Yasuyuki c/o Brother Kogyo K. K., Nagoya-shi Aichi-ken 467-8562 (JP)
(74) Representative: Hofer, Dorothea

(56) References cited:
- US-A- 5 517 621
- US-A- 5 708 827
- US-A1- 2003 065 590
- US-B1- 6 538 765
- ADOBE SYSTEMS INC: "PDF Acrobat-Reader Manual" ADOBE READER 6.0 USER GUIDE, [Online] 31 December 2003 (2003-12-31), pages 1-113, XP002329654 SAN JOSE, CALIFORNIA Retrieved from the Internet: URL:http://www.adobe.de/products/acrobat/p dfs/acrruserguide.pdf> [retrieved on 2005-05-27]

## Description

### BACKGROUND

### 1. Field

The disclosure relates to a print data editing apparatus and print data editing program.

### 2. Description of Related Art

Generally, when a label describing a name, address and the like or a label describing a title to be affixed to a case of video tape or the like is prepared, an output format preliminarily determined is prepared as a template. A graphic or diagram is inputted following the template and a print based on its format is carried out. Not only a text is inputted directly to such a template but also according to a tape printer described in Japanese Patent Application Laid-Open Publication No. 2000-76231, an output image is created by bringing data from database.

According to such a conventional apparatus and method, when print data is created, a single object template is selected from a plurality of prepared templates and a text or database data is inserted into its data input area (hereinafter referred to as object) disposed on the template. Thus, if the user wants to change the print layout after an input to an object of a selected template is finished, it is necessary to redo the procedure from the selection of a template. Further, even if the user wants to select a template after realizing an image of inputted text is finished, the user cannot know what the inputted data would look like in other templates, as the inputted data only applies to the template into which it was entered. Hence, conventionally, insufficient information for appropriate selection of a template has been provided to the user.

From US 2003/0 065 590 A1 a print data editing apparatus can be taken, wherein image data is received and wherein text data is received. On a display means multiple versions of the image having various text positions are displayed. The user enter the desired text position. The claims are delimited against this document.

From US 5,708,827 a spread sheet calculation apparatus for preparing spread sheet tables can be taken. A display device displays the spread sheet data and calculation formula. When a desired area on a display screen is designated by an input device to enter data, a calculation formula control unit searches for a calculation formula which relates to the designated area from the calculation formula table and executes the calculation formula.

### SUMMARY OF THE INVENTION

The disclosed subject-matter is intended to address and to solve the above-described problem. An object of the disclosure is to provide a print data editing apparatus and print data editing program, which enable a plurality of templates to be displayed all at once with the inputted data in order to confirm their print images.

This object is solved by the features according to claim 1 and the program according to claim 6. Further advantageous embodiments are subject of the dependent claims.

### BRIEF DESCRIPTION OF THE DRAWINGS

Embodiments will be described below in detail with reference to the accompanying drawings in which:

FIG. 1 is a block diagram showing the electric structure of a print data editing apparatus;

FIG. 2 is a schematic diagram showing the configuration of a template database stored in a hard disk unit of the print data editing apparatus;

FIG. 3 is a schematic diagram showing the structure of a RAM of the print data editing apparatus;

FIG. 4 is a schematic diagram showing the configuration of input text memory area and display template memory area of the RAM;

FIG. 5 is a second schematic diagram showing the configuration of input text memory area and display template memory area of the RAM;

FIG. 6 is an image diagram showing an example of a main screen displayed in the case where a print data editing program is started;

FIG. 7 is a second image diagram showing an example of a main screen displayed in case where the print data editing program is started;

FIG. 8 is a flow chart of the main routine of a print data editing apparatus;

FIG. 9 is a flow chart of the subroutine for display change processing to be carried out in S4 of FIG. 8, S45 of FIG. 10, S62 of FIG. 11, S77 of FIG. 12, S105 of FIG. 13, S149 of FIG. 15, and S169 of FIG. 16;

FIG. 10 is a flow chart of the subroutine of text box input processing to be carried out in S9 of FIG. 8;

FIG. 11 is a flow chart of the subroutine of template direct editing processing to be carried out in S11 of FIG. 8;

FIG. 12 is a flow chart of the subroutine of image change processing to be carried out in S14 of FIG. 8;

FIG. 13 is a flow chart of the subroutine of database connection processing to be carried out in S18 of FIG. 8;

FIG. 14 is a flow chart of the subroutine of print processing to be carried out in S22 of FIG. 8;

FIG. 15 is a flow chart of the subroutine of display quantity change processing to be carried out in S26 of FIG. 8;

FIG. 16 is a flow chart of the subroutine of category change processing to be carried out in S30 of FIG. 8;

FIG. 17 is a flow chart of the subroutine of enlargement display processing to be carried out in S34 of FIG. 8;

FIG. 18 is an image diagram of a merge field selection screen to be displayed upon database connection processing;

FIG. 19 is an image diagram of a print object selection screen;

FIG. 20 is an image diagram of a main screen after the display quantity is changed;

FIG. 21 is an image diagram of a category selection screen; and

FIG. 22 is an image diagram of a main screen executing enlargement display.

### DETAILED DESCRIPTION OF EMBODIMENTS

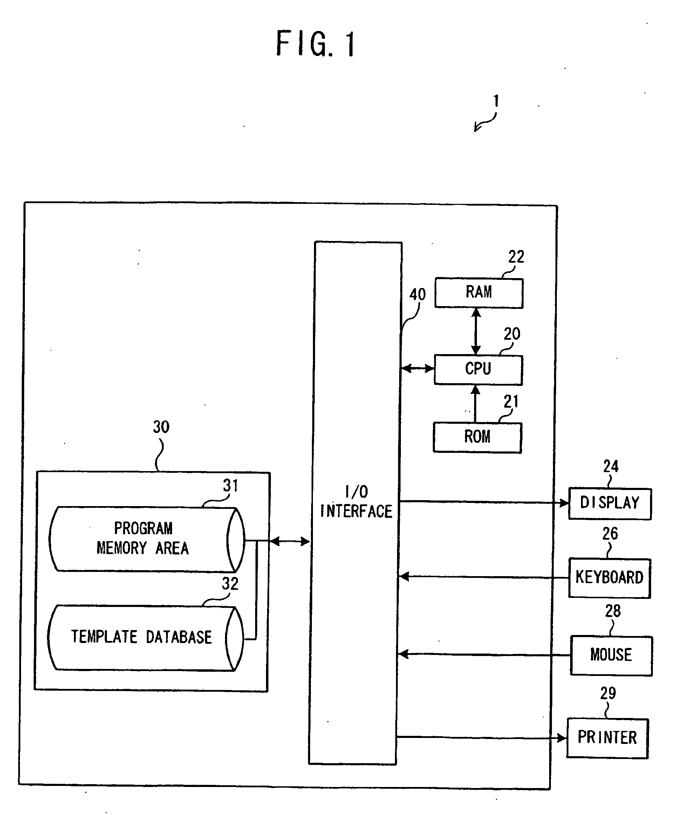

The preferred embodiments will be described with reference to the accompanying drawings. First, the structure of the print data editing apparatus 1 will be described with reference to FIGS. 1-7.

As shown in FIG. 1, the print data editing apparatus 1 is constituted of a well known personal computer and comprises a CPU 20 for controlling the print data editing apparatus 1. A ROM 21 which stores BIOS and the like, a RAM 22 for temporarily storing various kinds of data and an I/O interface 40 which acts as an interface for data exchange are connected to the CPU 20. A display 24 which is a display means for displaying characters, images and the like, a keyboard 26 for inputting data using various keys, a mouse 28 for pointing at an arbitrary place on the screen, a printer 29 for executing printing following an instruction from the print data editing apparatus 1, and a hard disk unit 30 are connected to the I/O interface 40. The hard disk unit 30 includes a program memory area 31 which stores programs to be executed in the CPU 20 and a template database 32.

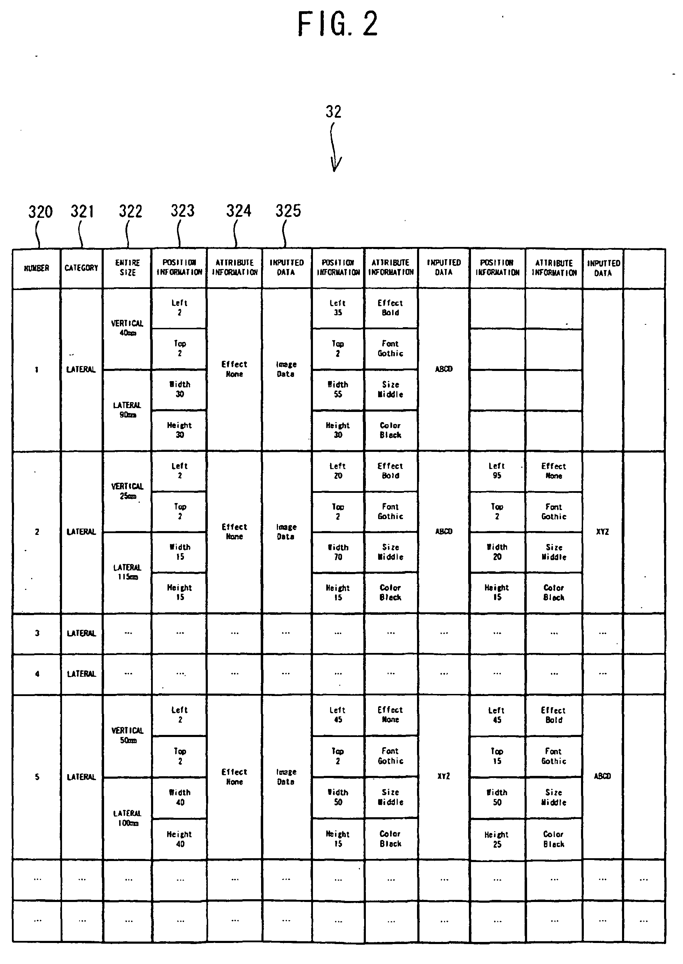

The template database 32 is an assembly of templates which determines how individual inputted data (objects) are arranged for print. As shown in FIG. 2, the template database 32 comprises fields for a template number 320, a category 321 indicating a category to which the template belongs, an entire size 322 indicating the size of the template, position information 323 indicating the position of an object disposed on the template, attribute information 324 indicating character modification of data of a given object, text to be inputted to the given object, and input data 325 in which the image data itself is to be inputted. In the meantime, the respective fields for the position information 323, attribute information 324 and input data 325 are prepared in a quantity equal to that of objects disposed on the template and registered successively from an object top on the left of the template.

For example, template number 1 in FIG. 2 belongs to "lateral" which is a category of a template arranged laterally and the size of the template is 40 mm vertically and 90 mm horizontally. A first object is disposed 2 mm from the left end of the template and 2 mm from the top. The size of the object is 30 mm in width and 30 mm in height. The object allows an image data (image file) to be inputted to itself and is not modified. A second object is disposed 35 mm from the left end and 2 mm from the top. The size of the object is 55 mm in width and 30 mm in height. Text can be inputted to the object and "bold letter" as an effect or style, "gothic" as a font, "medium" as a character size and "black" as a character color are specified as character modifications within the object. "ABCD" is inputted to this object as the text data of a predetermined value. Because there is no data in subsequent fields, the two objects mentioned above are disposed in template number 1.

Further, template number 2 in FIG. 2 belongs to the category "lateral" like the template number 1 and the size of the template is 25 mm vertically and 115 mm horizontally. A first object is disposed 2 mm from the left end of the template and 2 mm from the top and the size of the object is 15 mm in width and 15 mm in height. An image data (image file) can be inputted to the object and that object is not modified. A second object is disposed 20 mm from the left end of the template and 2 mm from the top and the size of the object is 70 mm in width and 15 mm in height. Text can be inputted to the object and "bold letter" as the effect or style, "gothic" as the font, "medium" as the character size and "black" as the character color are specified as character modifications within the object. "ABCD" is inputted to this object as text data of a predetermined value. Therefore, text data of the same content as the second object of the template 1 is inputted to this object. A third object is disposed 95 mm from the left end of the template and 2 mm from the top and the size of the object is 20 mm in width and 15 mm in height. Text can be inputted to the object and "no specification" as the effect or style, "gothic" as the font, "medium" as the character size and "black" as the character color are specified as character modifications within the object. "XYZ" is inputted to this object as text data of a predetermined value. Because there is no data in the subsequent field, the three objects mentioned above are disposed in template number 2.

Template number 5 in FIG. 2 belongs to the category "lateral" and the size of the template is 50 mm vertically and 100 mm horizontally. A first object is disposed 2 mm from the left end of the template and 2 mm from the top and the size of the object is 40 mm in width and 40 mm in height. Then, an image data (image file) can be inputted to the object and that object is not modified. A second object is disposed 45 mm from the left end and 2 mm from the top and the size of the object is 50 mm in width and 15 mm in height. Text can be inputted to the object and "no specification" as the effect or style, "gothic" as the font, "medium" as the character size and "black" as the character color are specified as character modification within the object. "XYZ" is inputted to this object as text data of a predetermined value. Therefore, text data of the same content as the third object of the template 2 is inputted to this object. A third object is disposed 45 mm from the left end of the template and 15 mm from the top and the size of the object is 50 mm in width and 25 mm in height. Text can be inputted to the object and "bold letter" as the effect or style, "gothic" as the font, "medium" as the character size and "black" as the character color are specified as character modification within the object. "ABCD" is inputted to this object as text data of a predetermined value. Therefore, text data of the same content as the second object of the template 1 and the second object of the template 2 is inputted to this object. Because there is no data in the subsequent field, the three objects mentioned above are disposed in the template number 5.

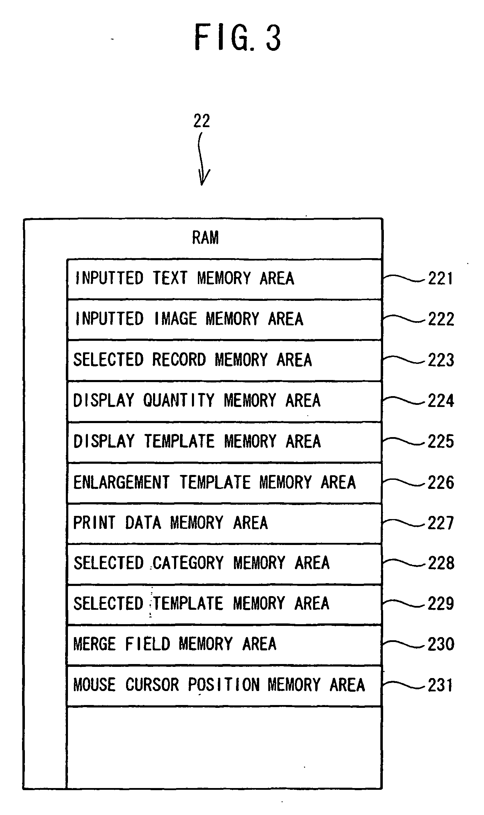

As shown in FIG. 3, the RAM 22 comprises an input text memory area 221 which temporarily stores text data inputted with the keyboard 26 and/or the mouse 28, an input image memory area 222 which temporarily stores an image file selected for inputting into an object, a selected record memory area 223 which, when a database in which inputted data is already stored is connected to reflect the data upon the template, stores a selected record data temporarily, a display quantity memory area 224 which stores the quantity of templates being currently displayed, a display template memory area 225 which stores information about the template, an enlargement template memory area 226 which temporarily stores a template indicated in enlargement by moving the mouse cursor, a print data memory area 227 which temporarily stores print data generated about the template instructed to be printed, a selected category memory area 228 which temporarily stores the category of a currently selected template, a selected template memory area 229 which stores information of a template being edited because an object in the template is selected, a merge field memory area 230 which stores the correspondence between database field and template object when connecting the database, and mouse cursor position memory area 231 which temporarily stores the position of a current mouse cursor. Further, various types of work areas are prepared for the RAM 22.

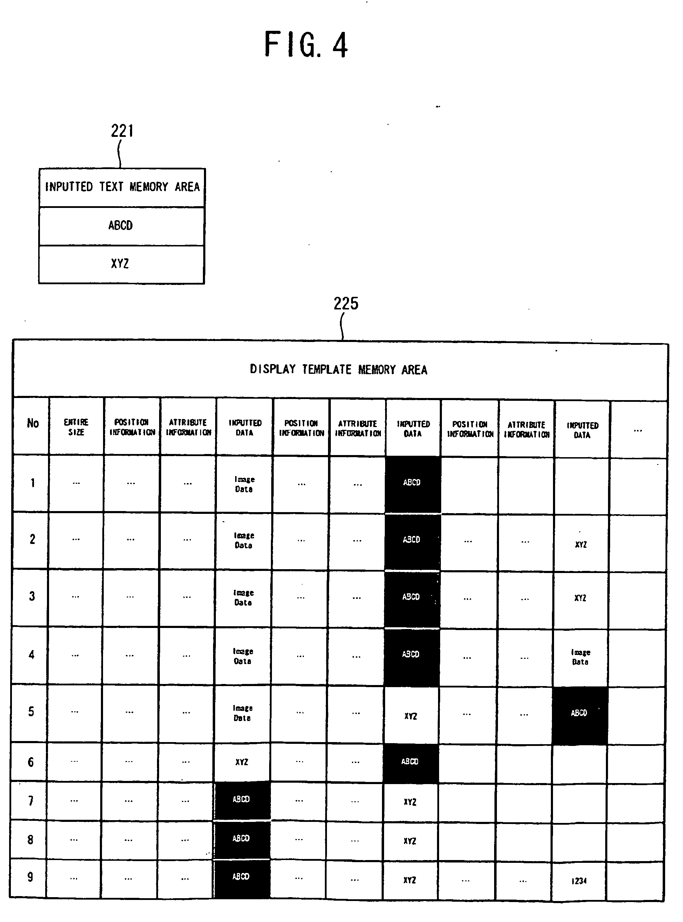

As shown in FIG. 4, information about all templates belonging to a currently selected category is read out from the template database 32 and stored in the display template memory area 225. FIG. 4 indicates a state in which nine templates belonging to the category "lateral" currently selected is read into the display template memory area. Of the objects within the display template memory area 225, an image object interlocks with image file data within an input image memory area 222 and a text object interlocks with text data in an input text memory area 221, as shown FIG. 4. According to the example shown in FIG. 4, respective data "ABCD", "XYZ" in the input text memory area 221 are stored at corresponding positions of the text object in the display template memory area 225.

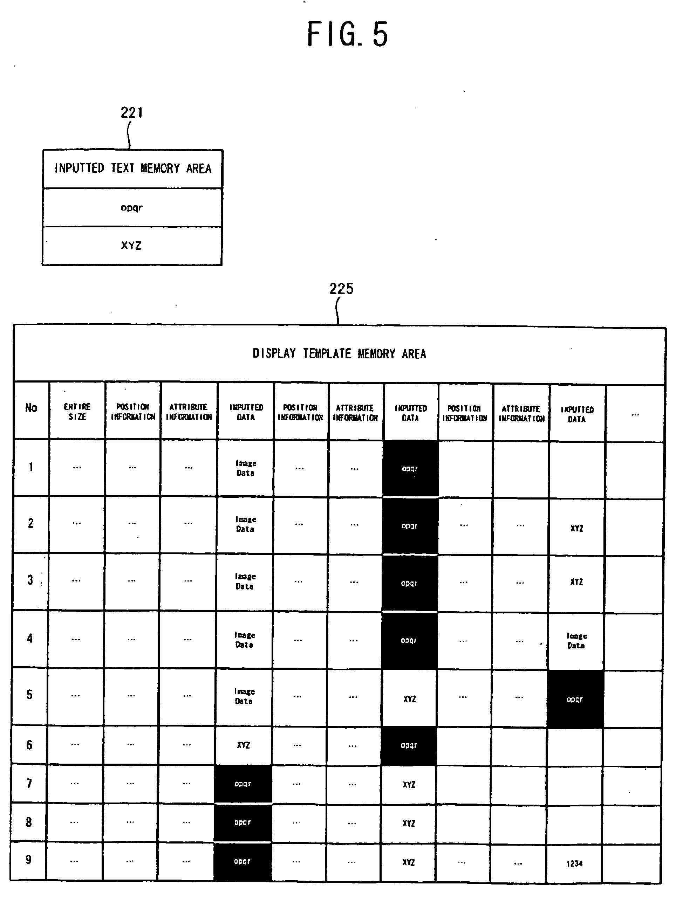

When new text data is stored in the input text memory area 221, the value of a corresponding text object is updated in an interlocking manner. Now if text data "opqr" is newly stored instead of "ABCD" in the input text memory area 221 as shown in FIG. 5, "opqr" is stored in a text object corresponding to the display template memory area 225 instead of "ABCD" ("opqr" is now indicated with, for this example, white letters on a black background in FIG. 5). For "XYZ", the text data is not changed, so it remains as in Fig. 4 and as previously stored.

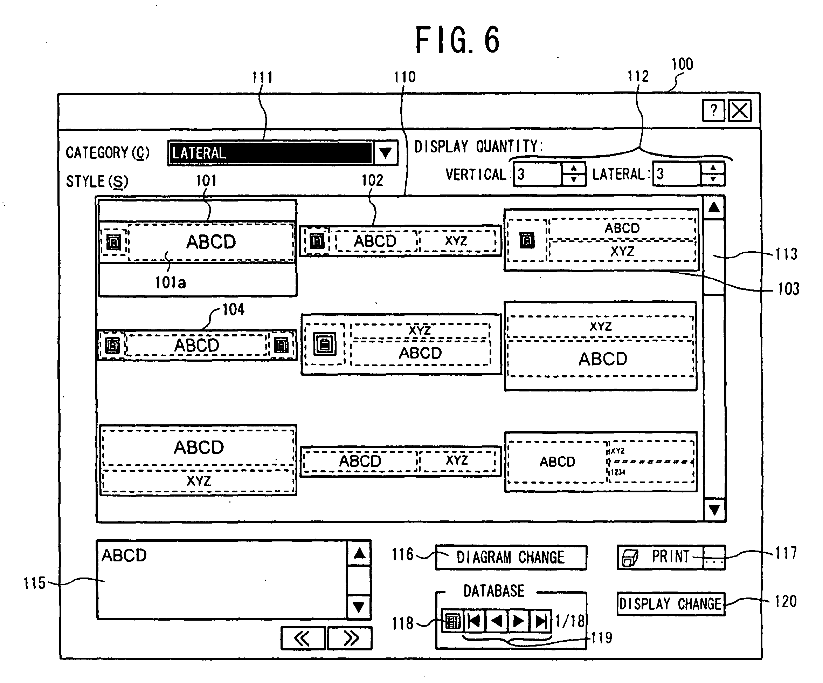

A main screen 100, which is displayed when the print data editing program is started, will be described with reference to FIG. 6. A template display region 110 is disposed in the center of the main screen 100 and a category selection combo box 111 is displayed on the top left of the template display region 110. Two display quantity spin boxes 112, one for specifying its vertical quantity and one for specifying its lateral quantity, are prepared on the right side of the category selection combo box 111. A text box 115 which displays an input text and accepts editing is disposed on the bottom left of the template display region 110. A diagram change button 116 for specifying an image data to be inserted into an image object is disposed on the right side of the text box 115 and a print button 117 for executing printing according to a template is disposed further to the right side. A record move button 119 for moving a record on a database connected to the database connection button 118 for inserting record data from an existing database into the template is disposed below the diagram change button 116. Further, a display change, or update, button 120 for reflecting the inputted data on all templates is disposed below the print button 117.

As already described above, templates stored in the template database 32 are classified depending on a plurality of categories. By selecting a desired category from the category selection combo box 111, a template group belonging to that category is stored in the display template memory area 225 of the RAM 22 and displayed on the template display region 110. The display in the template display region 110 is so constructed that a desired quantity of displays are executed by the display quantity spin boxes 112 all at once. For example, if, as shown in FIG. 6, the vertical display quantity spin box 112 is set to 3 and the lateral display quantity spin box 112 is set to 3, the template display region 110 is divided into nine areas or displays, so that a total of nine templates are displayed at one time. If the quantity of selected templates is larger than the quantity specified by the display quantity spin box 112, operating a scroll bar 113, disposed on the right side of the template display region 110, enables the templates hidden before and behind those displayed to be displayed.

The user can select a text object of respective templates, such as a template 101, a template 102, a template 103, and a template 104 displayed on the template display region 110, for example, a text object 101 a and input directly for editing. Further, it is possible to input a text into the text box 115 through the keyboard and reflect that data upon each template. Further, if the text object of each template is selected and inputted directly, its input content is displayed on the text box 115, so that user can recognize and edit the inputted text easily.

If each template has an image object, pressing the diagram change button 116 enables a desired image data to be selected and inputted. Although this embodiment assumes that a single image data can be selected, it is permissible to so construct the template that a plurality of image data can be inputted.

After confirming a print image of data inputted to each template through the template display region 110, the user can execute a print operation for a specified template by clicking the print button 117. The template which is a print object may be selected either before the print button 117 is pressed or after the print button 117 is pressed. If a plurality of templates are selected (an example of doing so is discussed below in paragraph [0072]), printing based on the plurality of patterns can be executed all at once.

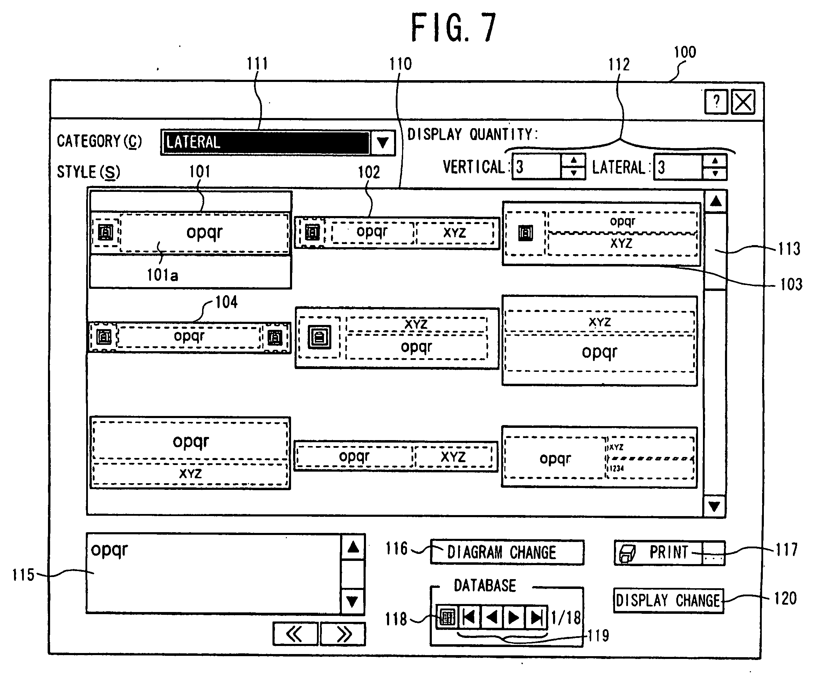

Next, updating of the print image within the template display region 110 in case where text data is inputted will be described with reference to FIG. 7. If a text object of any template within the template display region 110 is selected and text data is inputted, the text data is stored in the input text memory area 221 of the RAM 22 and the data content of a text object corresponding to the display template memory area 225 is updated in an interlocking manner. Accompanied by this data updating, displays of all templates within the template display region 110 are updated. In FIG. 6, three kinds of text objects, "ABCD", "XYZ" and "1234" are inputted. Among these, if text object of "ABCD", for example, text object 101a of the template 101 is clicked, and "opqr" is inputted instead of "ABCD", "opqr" is displayed in the text box 115 as shown in FIG. 7 and by pressing the display change button 120 or elsewhere on the display outside the textbox 115, the displays of all templates are updated as shown in FIG. 7. In other words, although in FIG. 6, "ABCD" is displayed on all the templates, "opqr" is now displayed thereon. In addition, according to this embodiment, although the display is updated after a sequential editing work is finished when a text object within a single template is directly edited, it is permissible to update the display of all the templates by the input of a single character.

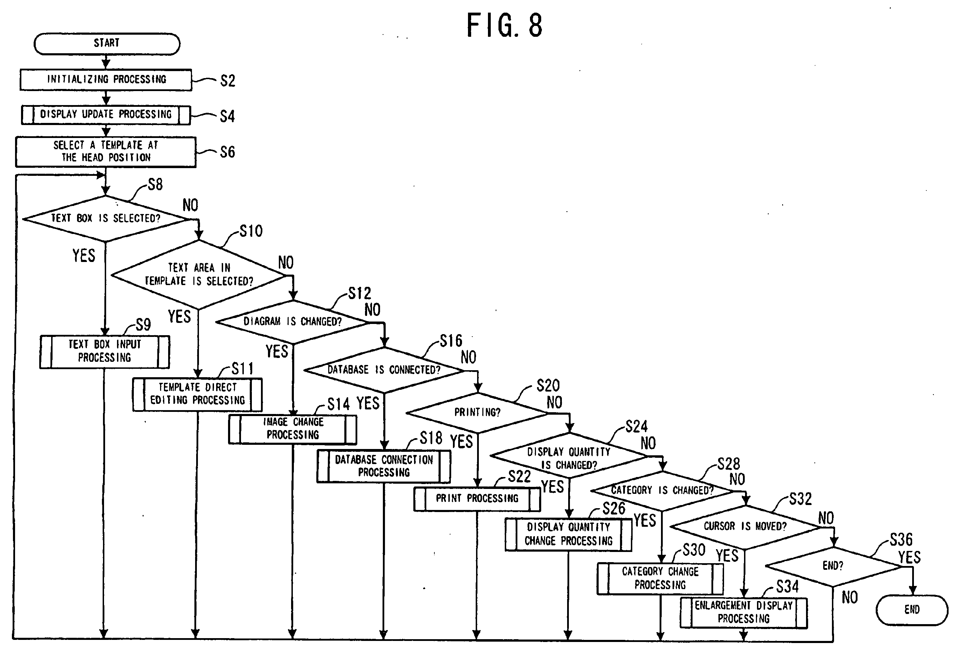

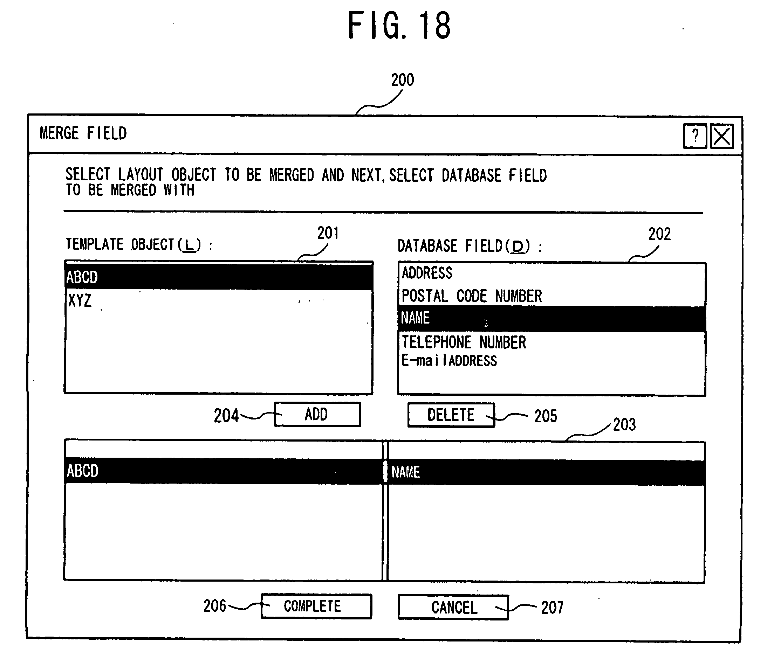

Next, the operation of the print data editing apparatus 1 having the above-described structure will be described with reference to flow charts of FIGS. 8-17 and the examples of display screens formed in FIGS. 18-22. In the meantime, each program shown in the flow charts of FIGS. 8-17 is stored in the program memory area 31 of the hard disk unit 30 and executed by the CPU 20.

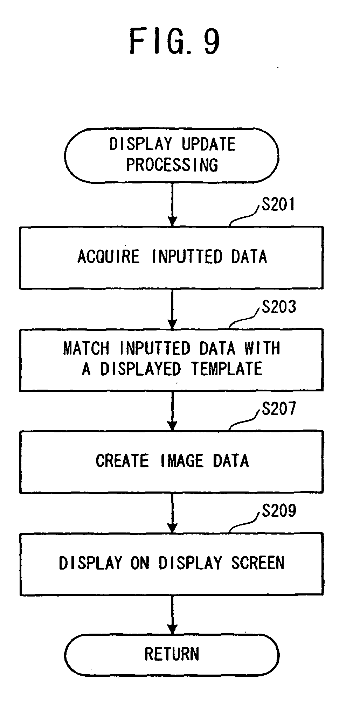

When the user starts the print data edit program, shown in Fig. 8, first, the respective memory areas in the RAM 22 are reset and initializing processing, such as reading a predetermined value, is carried out (S2). Next, display update processing is carried out using the read predetermined value (S4). The detail of the display update processing will be described later with reference to FIG. 9. With the display update processing, the main screen 100, shown in FIG. 6, is displayed on the display 24. A template displayed at the head (top left of the template display region 110 in the main screen 100) is selected as shown in FIG. 6 and surrounded with a rectangular frame (S6).

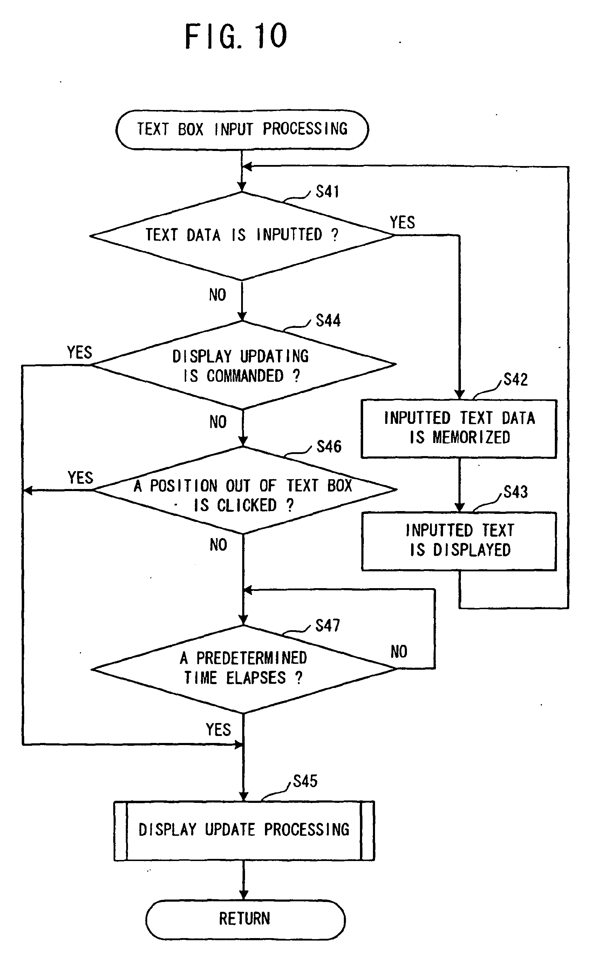

Next, whether a text box 115 is selected by operating the mouse 28 is determined (S8). If the text box 115 is selected (S8: YES), input text data is accepted into the text box 115 and text box input processing for reflecting it upon an object corresponding to each template is executed (S9) and then the procedure returns to S8. Details of the text box input processing will be described later with reference to FIG. 10.

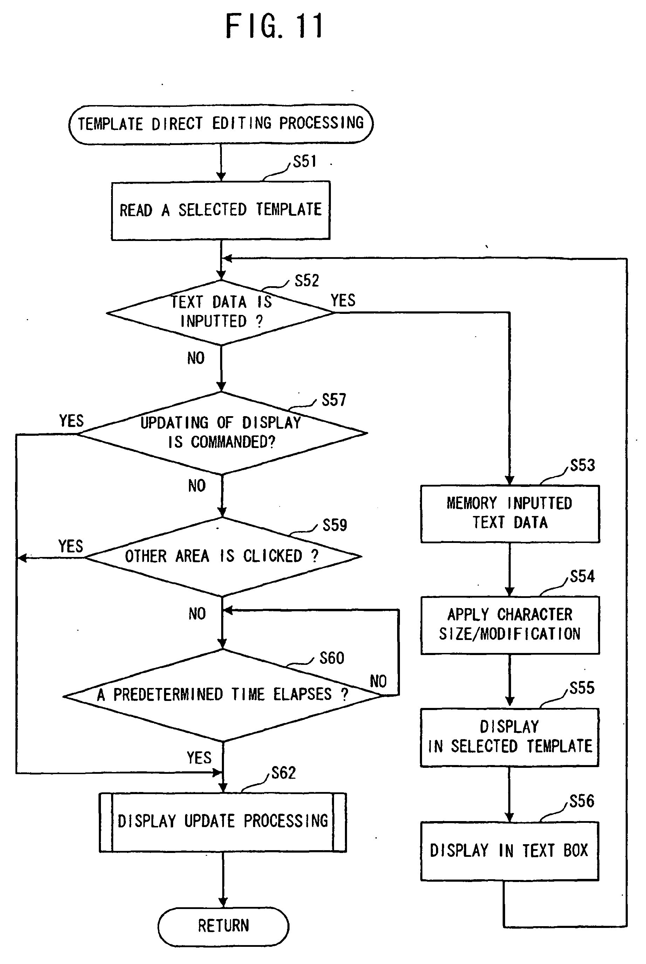

When the text box 115 is not selected (S8: NO), whether the text object of any template displayed on the template display region 110 is selected by operating the mouse 28 is determined (S10). If the text obj ect of a template is selected (S10: YES), a direct editing processing for accepting the input text data with the given text object and displaying directly in the template is executed (S11) and the procedure returns to S8. Details of the template direct editing processing will be described later with reference to FIG. 11.

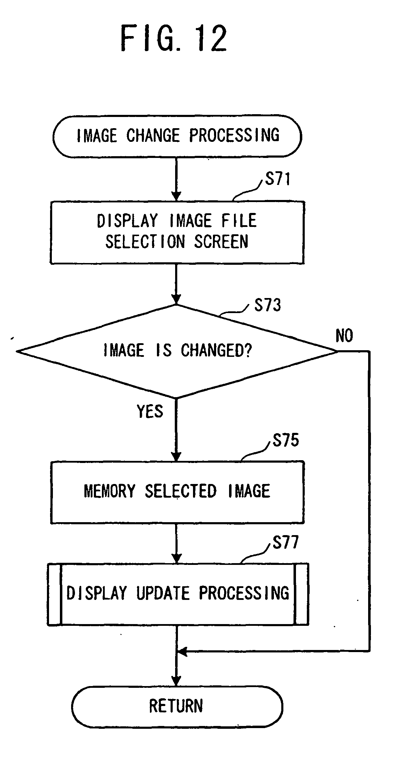

In the case no text object in the template is selected (S10: NO), whether the diagram change button 116 is pressed by operating the mouse 28 is determined (S 12). If the diagram change button 116 is pressed (S12: YES), an image change processing for selecting an image file and reflecting it upon an image object of the template is executed (S14) and the procedure returns to S8. Details of the image change processing will be described later with reference to FIG. 12.

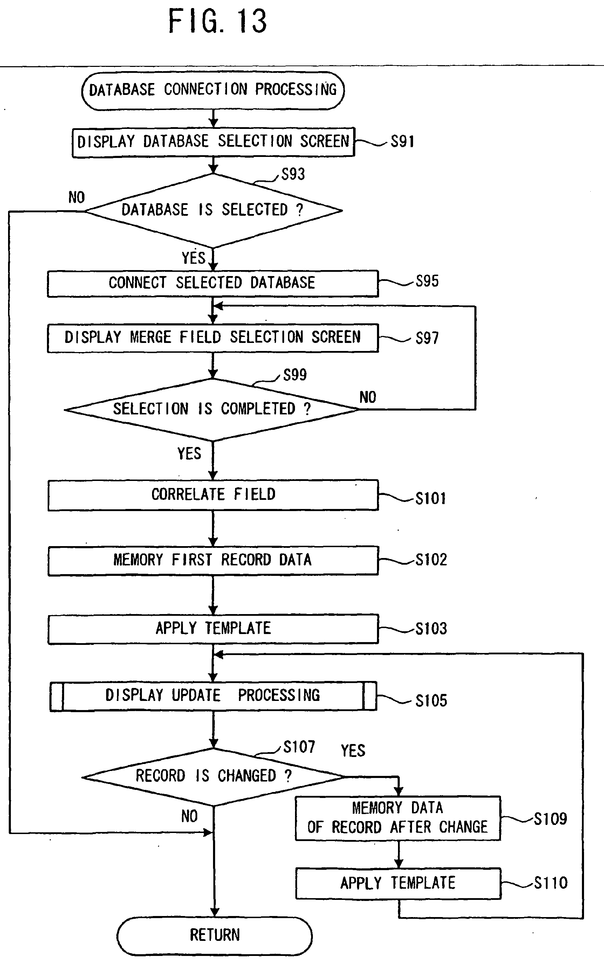

In the case a diagram is not changed (S12: NO), whether the database connection button 118 is pressed by operating the mouse 28 is determined (S16). If the database connection button 118 is pressed (S16: YES), a database connection processing for selecting the database and reflecting data of its record upon the template is executed (S18) and the procedure returns to S8. Details of the database connection processing will be described later with reference to FIG. 13.

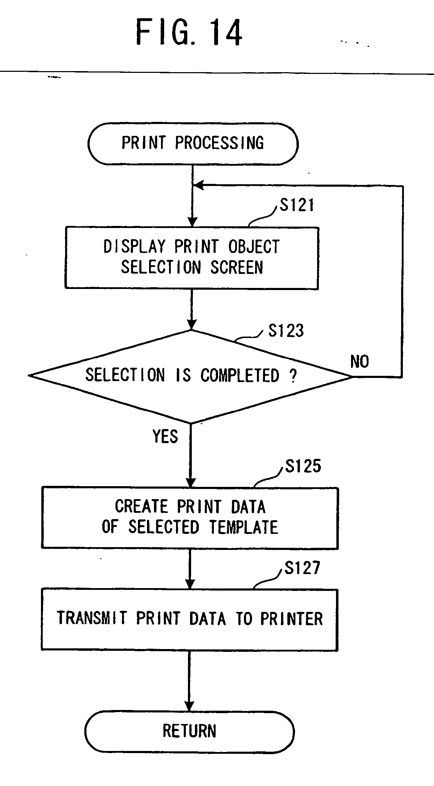

In the case where the database is not connected (S16: NO), whether the print button 117 is pressed by operating the mouse 28 is determined (S20). If the print button 117 is pressed (S20: YES), print processing for selecting the template and executing a print is executed (S22) and the procedure returns to S8. Details of the print processing will be described later with reference to FIG. 14.

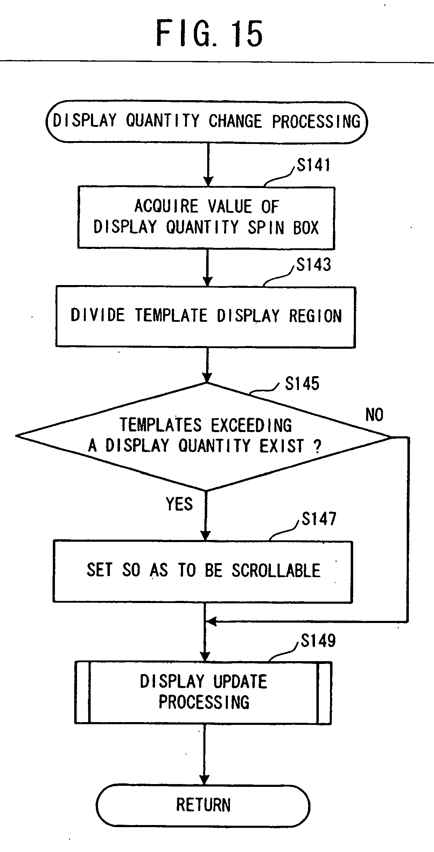

When the print process is not executed (S20: NO), whether the display quantity spin box 112 is operated by operating the mouse 28 is determined (S24). If the display quantity spin box 112 is operated, display quantity change processing for changing the quantity of templates to be displayed in the template display region 110 according to an instruction is executed (S26) and the procedure returns to S8. Details of the display quantity change processing will be described later with reference to FIG. 15.

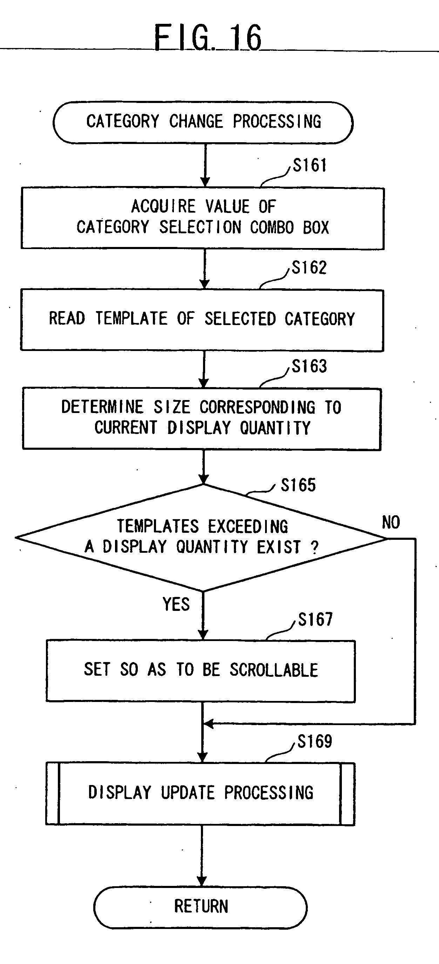

In the case where the display quantity is not changed (S24: NO), whether the category selection combo box 111 is operated by operating the mouse 28 is determined (S28). If the category selection combo box 111 is operated (S28: YES), category change processing for changing the type of the display template is executed (S30) and the procedure returns to S8. Details of the category change processing will be described later with reference to FIG. 16.

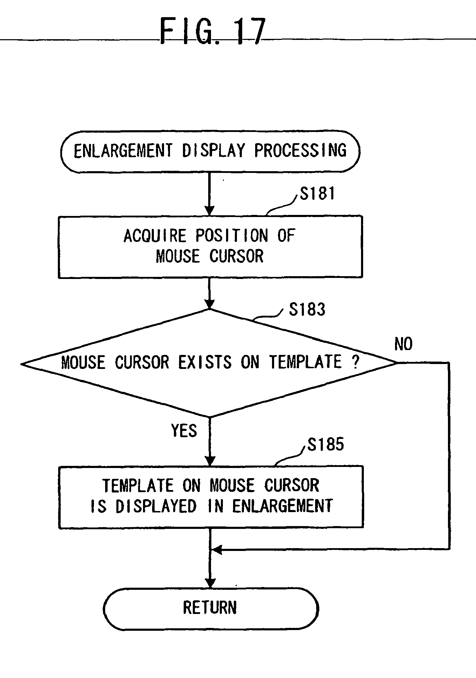

In the case where the category is not changed (S28: NO), whether the mouse cursor is moved by operating the mouse 28 is determined (S32). If the mouse cursor is moved (S32: YES), enlargement display processing for enlarging the template of a destination is executed (S34) and the procedure returns to S8. Details of the enlargement display processing will be described later with reference to FIG. 17.

In the case the mouse cursor is not moved (S32: NO), whether termination is commanded is determined (S36). If the termination is commanded (S36: YES), the print data editing program is terminated. If the termination is not commanded (S36: NO), the procedure returns to S8, in which the above-described processing is repeated.

Next, display update processing, which is to be executed in S4 of FIG. 8, will be described with reference to FIG. 9. First, respective data stored in the input text memory area 221 and the input image memory area 222 of the RAM 22 is acquired (S201). Next, the acquired data is matched with data areas of all objects corresponding to the display template memory area 225 of the RAM 22 and stored (S203). Then, print image data of the template of the display template memory area 225 is created according to the matched data (S207). Then, a print image of each template is displayed in the template display region 110 according to the created image data (S209) and the procedure returns to the main routine of FIG. 8.

Next, the text box input processing to be executed in S9 of FIG. 8 will be described with reference to FIG. 10. First, whether text data is inputted through the keyboard 26 or the mouse 28 is determined (S41). If the text data is inputted (S41: YES), the inputted text data is stored in the input text memory area 221 of the RAM 22 (S42). Then, the inputted text is displayed in the text box 115(S43). The procedure then returns to S41, in which it is determined whether next text data is inputted.

In the case where no text data is inputted (S41: NO), whether the display update button 120 is pressed is determined (S44). If the display update button 120 is pressed (S44: YES), display update processing for reflecting the input text upon all templates is executed (S45) and the procedure returns to the main routine of FIG. 8. The display update processing is carried out according to the subroutine of FIG. 9.

In the case the display update button is not pressed (S44: NO), whether a position outside of the text box 115 is clicked with the mouse 28 is determined (S46). If a position outside of the text box 115 is clicked (S46: YES), it is determined that the input processing into the text box 115 is terminated and display update processing for reflecting the inputted text upon all templates is executed (S45) and the procedure returns to the main routine of FIG. 8. The display update processing is carried out according to the flow chart of FIG. 9.

In the case where a position outside of the text box 115 is not clicked (S46: NO), the user waits until a predetermined time (for example, 30 seconds) elapses (S47: NO). If the predetermined time elapses (S47: YES), the display update processing is executed (S45) and the procedure returns to the main routine of FIG. 8. In the meantime, although according to this embodiment, when the display update button 120 is pressed, another area out of the text box 115 is clicked or a predetermined time elapses, it is determined that a sequential text data input is finished and the display update processing is executed so as to reflect the inputted data upon each template, all the templates may be updated each time when individual text data (character) is inputted.

Next, template direct editing processing, which is to be executed in S11 of FIG. 8, will be described with reference to FIG. 11. First, a template selected, using the mouse or the keyboard, from within the template display region 110 is read into the selected template memory area 229 of the RAM 22 (S51). Next, whether any text data is inputted through the keyboard 26 or the mouse 28 is determined (S52). If any text data is inputted (S52: YES), the inputted text data is stored in the data area of a text object being selected in the input text memory area 221 and the previously read selected template memory area 229 of the RAM 22 (S53). Next, a print image is created by applying character size and other modifications to the text data following an instruction of a template in the selected template memory area 229 (S54). Then, the result is displayed in the currently selected object (S55). Further, the inputted text is displayed in the text box 115 according to the previously stored input text memory area 221 (S56). Then, the procedure returns to S52, in which whether there is next text data to be inputted is determined.

In the case no text data is inputted (S52: NO), whether the display update button 120 is pressed is determined (S57). If the display update button is pressed (S57: YES), display update processing for reflecting inputted text upon all templates is executed (S62) and the procedure returns to the main routine of FIG. 8. The display update processing is carried out according to the subroutine shown in the flow chart of FIG. 9. If the display update button is not pressed (S57: NO), whether an area other than the selected text area is clicked with the mouse 28 is determined (S59). If another area is clicked (S59: YES), it is determined that the text input processing to the template is finished and the display update processing for reflecting the inputted text upon all templates is carried out (S62). Then, the procedure returns to the main routine of FIG. 8.

In the case another area is not clicked (S59: NO), the user waits until a predetermined time (for example, 30 seconds) elapses (S60: NO). If the predetermined time elapses (S60: YES), the display update processing is carried out (S62) and the procedure returns to the main routine of FIG. 8. According to this embodiment, when the display update button 120 is pressed, another area than the selected text area is clicked or a predetermined time elapses, it is determined that a sequential text data input is finished and the display update processing is carried out. Although the inputted data is displayed only in a currently selected object up to update, a print image on which the inputted data is reflected may be displayed on all templates each time when individual text data (character) is inputted.

Next, the image change processing, which is to be executed in S14 of FIG. 8, will be described with reference to FIG. 12. First, an image file selection screen for selecting image data to be inserted into the image object is displayed (S71). Then, whether an image displayed currently in the template display region 110, that is, an image different from an image file stored in the input image memory area 222 is selected is determined (S73). If the image is not changed (S73: NO), the procedure returns to the main routine of FIG. 8. If the image is changed (S73: YES), the selected image is stored in the input image memory area 222 (S75) and display update processing for reflecting that the selected image upon all templates containing image data is executed (S77. Then, the procedure returns to the main routine of FIG. 8. The display update processing is carried out according to the subroutine shown in the flow chart of FIG. 9.

Next, the database connection processing, which is to be executed in S18 of FIG. 8, will be described with reference to FIG. 13. First, a database selection screen for selecting a database file for use is displayed (S91). The database selected here is stored in a specified format and is assembled of data having at least a field and a record. For example, a database of addresses, constituted of fields for name, address, postal number and the like, or a music database, constituted of fields for music title, composers, artists and the like, can be considered. Next, whether a database is selected is determined (S93). If a database is not selected (S93: NO), the procedure returns to the main routine of FIG. 8.

If a database is selected (S93: YES), the selected database is connected and a field name of that database is acquired (S95). In order to display the database field and an object in the template by combination, a merge field selection screen 200 capable of correlating the acquired field names and object names to each other is displayed as shown in FIG. 18 (S97).

As shown in FIG. 18, in the merge field selection screen 200, a template object region 201 in which text object names indicated in the template is disposed on the top left, a database field region 202 in which field names of a connected database are indicated is disposed on the right side thereof, a merge region 203 indicating a merge condition of both is disposed on the bottom and an addition button 204 and a deletion button 205 are disposed between the top and bottom sections. A completion button 206 and a cancel button 207 are disposed below the merge region 203. If the addition button 204 is pressed in the condition in which one object name for the template object region 201 and one field name for the database field region 202 are selected, they are added to the merge region 203 in a form that both of them correspond to each other. Further, if the deletion button 205 is pressed after a combination of an object and a field in the merge field 203 is selected, that combination is deleted from the merge region 203. If specifications on all combinations of the object and field desired to be corresponded are completed and the completion button 206 is pressed, the merge field selection screen 200 is closed. Also, the cancel button 207 is pressed, the merge field selection screen 200 is closed.

Next, whether completion of selection is commanded with the completion button is determined (S99). If the selection is not completed (S99: NO), the procedure returns to S97, in which display of the merge field selection screen is continued. If the selection is completed (S99: YES), the template object and database field are correlated with each other according to a selected result and stored in the merge field memory area 230 of the RAM 22 (S101). Next, a first record data is stored in the selected record memory area 223 (S102). Then, record data is written into a given object of a template stored in the display template memory area 225 according to the correlation stored in S101 (S 103). A display update processing for updating the display of all templates is then executed (S 105). The display update processing is executed according to the subroutine indicated in the flow chart shown in FIG. 9.

Next, whether an object record to be inserted into the object is changed by pressing the record move button 119 is determined (S107). If the record is changed (S 107: YES), record data after the change is stored in the selected record memory area 223 (S 109). Record data is written into a given object of a template stored in the display template memory area 225 according to the correlation stored in the merge field memory area 230 (S110). Then, the procedure returns to S105, in which display update processing for updating displays of all templates is executed. If no record is changed (S107: NO), the procedure returns to the main routine of FIG. 8.

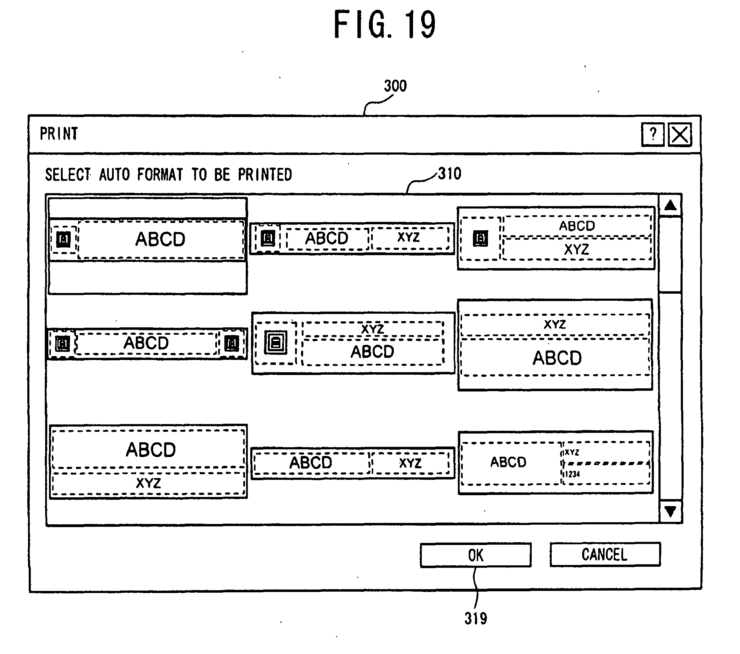

Next, print processing, which is to be executed in S22 of FIG. 8, will be described with reference to FIG. 14. First, a print object selection screen 300, as shown in FIG. 19, is displayed (S121). The print object selection screen 300 is displayed in the template display region 310, in which is reflected text data and image data inputted to the template of a currently selected category. By selecting a template in this template display region 310 and pressing the OK button 319, print is executed. Plural templates can be selected by employing a CTRL key of the keyboard and the mouse 28 at the same time or a similar method and if a plurality of templates are selected, prints of all the templates are executed.

Next, whether selection of the print object template(s) is completed by pressing the OK button 320 is determined (S123). If the selection is not completed (S123: NO), the procedure returns to S121, in which selection of a print object is continued. If the selection is completed (S123: YES), print data of the selected template is created and stored in the print data memory area 227 of the RAM 22 (S125). Then, the selected print data is transmitted to a printer 29 (S127) and the procedure returns to the main routine of FIG. 8. The embodiment is not restricted to a case where a print object template is selected after the print button 117 is pressed on the main screen, but it is permissible to so structure the system that printing of a selected template is executed by pressing the print button 117 in conditions in which a template is selected preliminarily on the main screen. Further, it is permissible to select a print object template on the print object selection screen 300 by adding a combination of both to an already selected template.

Next, the display quantity change processing, which is to be executed in S26 of FIG. 8, will be described with reference to FIG. 15. First, values inputted to the display quantity spin boxes 112 (see FIG. 6) are acquired and stored in the display quantity memory area 224 of the RAM 22 (S141). Then, the template display region 110 is divided according to the acquired values (S143). For example, if the vertical number is three and the lateral number is three, the region is divided into nine areas and if the vertical number is two and lateral number is two, the region is divided into four areas.

Next, whether templates of a quantity larger than a display quantity exist in a selected category is determined (S145). If the quantity of the templates is within the display quantity (S145: NO), the procedure proceeds to S149, in which display update processing is executed to update the display of the templates with the updated display quantity and the procedure returns to the main routine of FIG. 8. The display update processing is carried out according to the subroutine shown in the flow chart of FIG. 9.

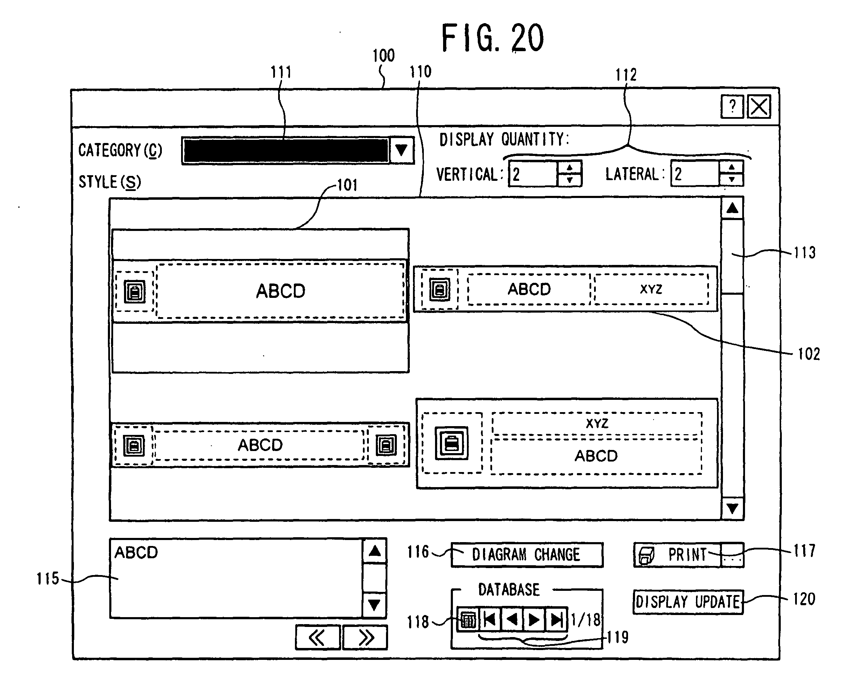

If templates of a quantity larger than the display quantity exists (S145: YES), the setting is made to enable scrolling using a scroll bar 113 (S147). Then, the display update processing is executed (S149) and the procedure returns to the main routine of FIG. 8. For example, if the display quantity indicated on the screen before the display quantity is changed is nine as shown in FIG. 6 and the display quantity after the display quantity is changed is changed to four, the screen after the display update processing is made is as shown in FIG. 20. If it is difficult to grasp a fine print image because the display 24 is small, reducing the display quantity makes the fine print image easier to see. On the contrary, if the display 24 is large or it is desired to compare a number of print images, if the display quantity is increased so as to display a number of templates all at once, it is effective.

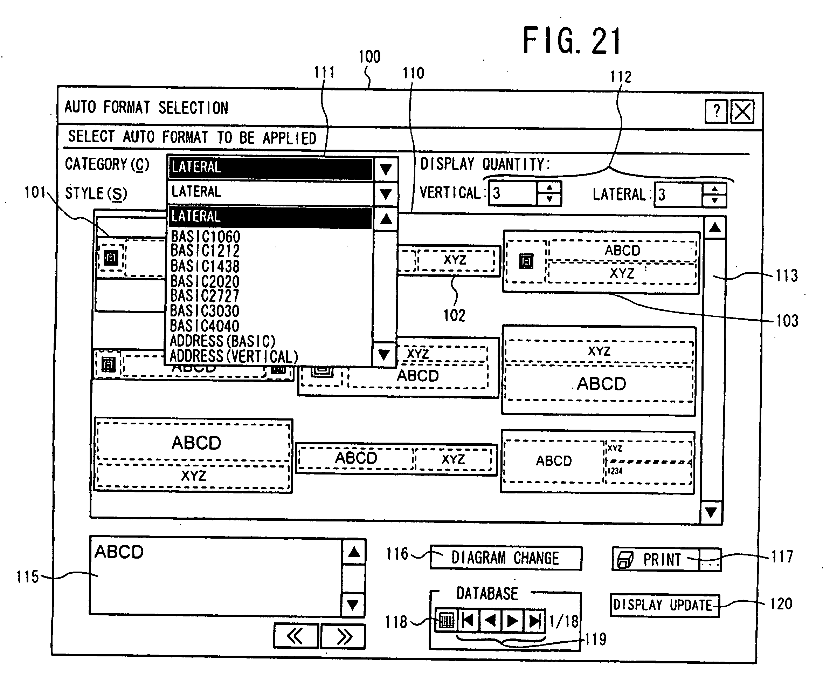

Next, the category change processing, which is to be executed in S30 of FIG. 8, will be described with reference to FIG. 16. First, a value in the category selection combo box 111 is acquired (S161). As shown in Fig. 21, by clicking a downward facing triangle on the right side of the category selection combo box 111, which indicates categories, by operating the mouse 28, a category list is indicated, so that a desired category can be selected. In S161, a value of the category selected is acquired. Next, a template, or templates, of a given category is read from the template database 32 according to the acquired category and stored in the display template memory area 225 of the RAM 22 (S162). Next, the display size of each template is determined corresponding to the current display quantity stored in the display quantity memory area 224 (S163).

Next, whether templates of a quantity exceeding the display quantity exists in a currently selected category is determined (S165). If the quantity of the templates is within the range of the display quantity (S165: NO), the procedure proceeds to S169, in which display update processing is executed to update the display of the templates with the updated display quantity and then, the procedure returns to the main routine of FIG. 8. The display update processing is carried out according to the subroutine shown in the flow chart of FIG. 9.

If templates of a quantity exceeding the display quantity exist (S165: YES), a setting is made to enable scrolling with the scroll bar 113 (S167). Then, the display update processing is executed (S169) and the procedure returns to the main routine of FIG. 8.

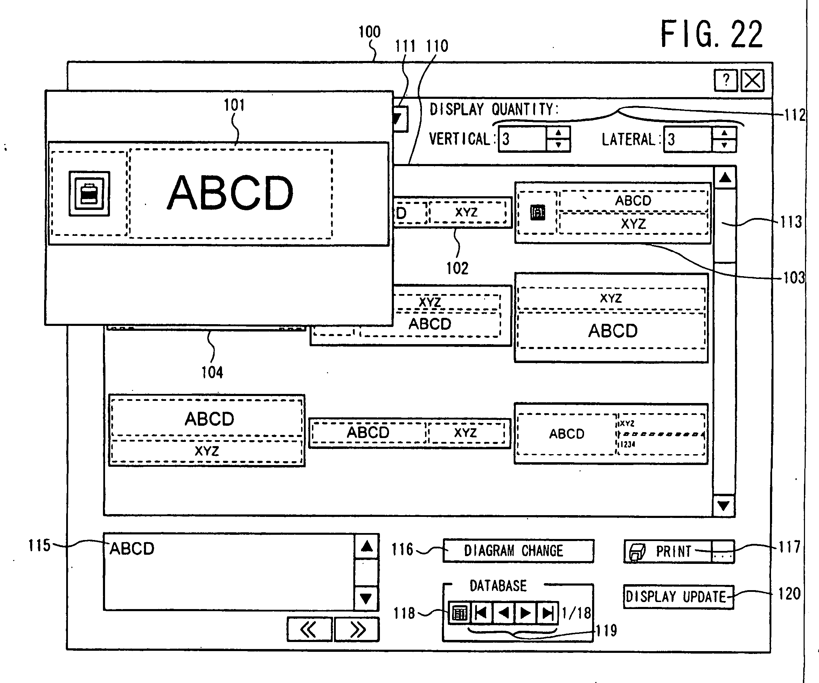

Next, the enlargement display processing, which is to be executed in S34 of FIG. 8, will be described with reference to FIG. 17. First, the position of the mouse cursor is acquired and stored in the mouse cursor position memory area 231 of the RAM 22 (S181). Next, the acquired mouse cursor position is compared with the positions of templates stored in the display template memory area 225 so as to determine whether the mouse cursor is located on a displayed template (S183). If the mouse cursor is not located on any of the templates (S183: NO), the procedure returns to the main routine of FIG. 8. If the mouse cursor is located on a template (S183: YES), the template located under the mouse cursor is displayed in enlarged form as shown in FIG. 22 (S185). FIG. 22 shows a case where the template 101 is displayed in enlarged form when the mouse cursor is located on the template 101. The magnification ratio is predetermined, for example, 200%. However, the magnification ratio may be configured so that the user can set it freely. After that, the procedure returns to the main routine of FIG. 8.

As described above, in the print data editing apparatus 1 of this embodiment, a plurality of templates belonging to the same kind of category are listed in the template display region 110 so that a user can view all of the print images and, if a text or image is changed, an editing result is reflected on all corresponding objects so as to execute display update processing. Consequently, it is possible to view and compare print images of a plurality of templates and print a template by selecting the appropriate template. Further, if it is desired to print a plurality of templates, that printing can be executed all at once.

As described above, if any text or image data is inputted through the print image display screen based on a plurality of templates in the print data editing apparatus, the input result is displayed in a form that it is reflected on all print images. Consequently, the user can readily view print images of the plurality of templates all at once and select an appropriate template before executing a print. Because it is not necessary to reenter data, either original or edited, each time a template is selected, if it is determined another template is better, it can then be selected and immediately printed as its data was updated when the original template was subject to data entry.

Further because there is provided a special input data display region as well as an image display region for displaying a print image, inputted data is always displayed in the input data display region at a predetermined size, so that an input result is easy to see and its edit can be carried out easily.

Because data can be inputted directly into a print image, not a text input region, and the inputted data is reflected on all other print images after the input is finished, a print image of a currently selected template can be viewed during input, so that user can perform his/her work more intuitively.

Because the quantity of templates which can be displayed at one time can be changed and the display size is automatically adjusted corresponding to the display quantity and if the number of displays available are in excess of the number of templates that can be displayed at one time, the display screen is made scrollable, the user can determine the quantity of print images which he/she wants to see at one time and make adjustments depending on the size of the display screen and application purpose.

Further, because it is possible to select a plurality of currently displayed templates and instruct the system to print them all at once, print based on a plurality of formats can be executed by a single action.

Further, because if one of the currently displayed templates is selected, it is displayed in an enlarged state, its detail is easy to grasp, for example, if the user desires to pay attention to any particular template. This point is especially effective when the size of the display screen is small.

If data is read from a preliminarily prepared database to an object of the template for use, the print image is updated when the record is changed over. Therefore, the print image of each record can be confirmed quickly.

The CPU 20, which executes the display update processing with S4 in Fig. 8, S45 in Fig. 10, S62 in Fig. 11, S77 in Fig. 12, S105 in Fig. 13, S149 in Fig. 15, S169 in Fig. 16 and in the subroutine of Fig. 19 may also be called a print image updating means.

The CPU 20, which executes the template direct editing processing with S11 in Fig. 8 and in the subroutine of Fig. 11, may also be called a display control means.

The CPU 20, which executes the display quantity change processing with S26 in Fig. 8 and in the subroutine of Fig. 15, may also be called a display quantity changing means.

The CPU 20, which executes the print data creation processing in S 125 of Fig. 14 may also be called a print data creating means.

The CPU 20, which executes the template enlargement display processing in S185 of Fig. 17, may also be called a display enlargement means.

The CPU 20, which executes the data base connection processing in S95 of Fig. 13, may also be called a reading means.

The template display region 110 may also be called an image display region, and the text book 115 may also be called an input data display region.

The mouse 28 and the keyboard 26 may also be called an input means, and the template data base 32 may also be called a template memory means, and the display 24 may also be called a display means. The mouse 28 and the keyboard 26 may also be called a print object selecting means and an enlargement object selecting means.

## Claims

1. A print data editing apparatus (1) that is adapted to generate a print image by applying a template to inputted data and displays the print image, comprising
input means (26, 28) for inputting said data;
template memory means (32) for storing a plurality of templates (101-104) each indicating a print format for printing said data inputted with the input means (26, 28);
display means (24) for displaying a plurality of print images each based on a template stored in the template memory means (32);
print image updating means (20) for updating all print images displayed on the display means (24) to print images on which said inputted data is reflected when the data is inputted by the input means (26, 28); and
pointing means (26, 28) for pointing to a predetermined region within a print image displayed in the display means (24),
**characterized by**:
display control means for controlling display of further data inputted by the input means (26, 28) in the predetermined region within all print images indicated by the display means (24) when the predetermined region is pointed to by the pointing means (26, 28) and said further data is inputted by the input means (26, 28),
enlargement object selecting means (26, 28) for selecting one of the print images displayed on the display means (24) : and
display enlargement means (20) for displaying an enlarged print image selected by the enlargement object selecting means (26, 28).

2. The print data editing apparatus according to claim 1, wherein the display means comprises an image display region (110) for displaying a print image and an input data display region (115) for displaying said data inputted with the input means.

3. The print data editing apparatus according to one of claims 1 or 2, further comprising a display quantity changing means for changing the quantity of print images to be displayed on the display means. (24).

4. The print data editing apparatus according to one of claims 1 to 3, further comprising:
print object selecting means (26, 28) for selecting at least one of the print images displayed on the display means (24); and
print data creating means (20) for creating a print data corresponding to a print image selected by the print object selecting means (26, 28).

5. The print data editing apparatus according to one of claims 1 to 4, further comprising input data memory means (221, 222), wherein the input means (26, 28) is constituted of a reading means(20) for reading data from the input data memory means (221, 222) and the print image updating means is adapted to update the print image when new data is read by the reading means (20).

6. A print data editing program stored in a computer readable medium, that makes a computer (1) execute:
displaying a plurality of print images (101-104, 221, 222) each based on a preliminarily prepared template (101-104); and
updating all print images (101-104, 221, 222) displayed to print images 101-104, 221, 222) on which inputted data is reflected when the data is inputted;
**characterized in that** the program makes the computer (1) execute:
displaying the inputted data in a predetermined region within one of the print images (101 101, 331, 222) ;
allowing the selection of one of the print images (101, 221, 222); and
displaying an enlargement of the selected print image (101, 221, 222).

7. The print data editing program according to claim 6, that further makes a computer execute:
displaying the print image in an image display region (110) ; and
displaying the inputted data in an input data display region (115).

8. The print data editing program according to one of claims 6 or 7, that further makes a computer execute changing the quantity of the print images to be displayed.

9. The print data editing program according to one of claims 6 to 8, that further makes a computer execute:
selecting at least one of the print images; and
creating print data corresponding to the selected print image.

10. The print data editing program according to one of claims 6 to 9, that further makes a computer execute reading data from an assembly (221, 222) of inputted data previously stored, wherein in the step of updating the print image, the print image is updated when new data is read in the data reading step.

## Patentansprüche

1. Druckdateneditiergerät (1), das ausgelegt ist zum Erzeugen eines Druckbildes durch Anwenden eines Musters auf eingegebene Daten und das die Druckdaten anzeigt, mit:
einem Eingabemittel (26, 28) zum Eingeben der Daten;
einem Musterspeichermittel (32) zum Speichern einer Mehrzahl von Mustern (101-104), von denen jedes auf einem Muster basiert, das in dem Musterspeichermittel (32) gespeichert ist;
einem Druckdatenaktualisierungsmittel (20) zum Aktualisieren aller Druckbilder, die auf dem Anzeigemittel (24) angezeigt sind, zum Drucken von Bildern, auf denen die eingegebenen Daten reflektiert werden, wenn die Daten durch das Eingabemittel (26, 28) eingegeben werden; und
einem Zeigemittel (26, 28) zum Zeigen auf einen vorbestimmten Bereich innerhalb eines Druckbildes, das in dem Anzeigemittel (24) angezeigt ist,
**gekennzeichnet durch**:
ein Anzeigesteuermittel zum Steuern der Anzeige von weiteren Daten, die **durch** das Eingabemittel (26, 28) eingegeben sind, in dem vorbestimmten Bereich innerhalb aller Druckdaten, die **durch** das Anzeigemittel (24) bezeichnet sind, wenn auf den vorbestimmten Bereich **durch** das Zeigemittel (26, 28) gezeigt wird und wenn die weiteren Daten **durch** das Eingabemittel (26, 28) eingegeben werden;
ein Vergrößerungsobjektauswahlmittel (26, 28) zum Auswählen eines der Druckbilder, die auf dem Anzeigemittel (24) angezeigt sind; und
ein Anzeigevergrößerungsmittel (20) zum Anzeigen eines vergrößerten Druckbildes, das von dem Vergrößerungsobjektauswahlmittel (26, 28) ausgewählt ist.

2. Druckdateneditiergerät nach Anspruch 1, bei dem das Anzeigemittel einen Bildanzeigebereich (110) zum Anzeigen eines Druckbildes und einen Eingabedatenanzeigebereich (115) zum Anzeigen der mit dem Eingabemittel eingegebenen Daten aufweist.

3. Druckdateneditiergerät nach einem der Ansprüche 1 oder 2, weiter mit einem Anzeigemengenänderungsmittel zum Ändern der Menge von Druckbildern, die auf dem Anzeigemittel (24) anzuzeigen sind.

4. Druckdateneditiergerät nach einem der Ansprüche 1 bis 3, weiter mit:
einem Druckobjektauswahlmittel (26, 28) zum Auswählen von mindestens einem der auf dem Anzeigemittel (24) angezeigten Druckbildern; und
einem Druckdatenerzeugungsmittel (20) zum Erzeugen von Druckdaten entsprechend zu einem durch das Druckobjektauswahlmittel (26, 28) ausgewählten Druckbildes.

5. Druckdateneditiergerät nach einem der Ansprüche 1 bis 4, weiter mit einem Eingabedatenspeichermittel (221, 222), bei dem das Eingabemittel (26, 28) aus einem Lesemittel (20) zum Lesen von Daten aus dem Eingabedatenspeicher (221, 222) aufgebaut ist und das Druckdatenaktualisierungsmittel ausgelegt ist zum Aktualisieren des Druckbildes, wenn neue Daten durch das Lesemittel (20) gelesen werden.

6. Druckdateneditierprogramm, das in einem Computer-lesbaren Medium gespeichert ist, das verursacht, dass ein Computer (1) ausführt:
Anzeigen einer Mehrzahl von Druckbildern (101-104, 221, 222), von denen jedes auf einem vorläufig vorbereiteten Muster (101-104) beruht; und
Aktualisieren aller angezeigten Druckbilder (101-104, 221, 222) in Druckbilder (101-104, 221, 222), auf denen die eingegebenen Daten reflektiert sind, wenn die Daten eingegeben werden;
**dadurch gekennzeichnet, dass** das Programm bewirkt, dass der Computer (1) ausführt:
Anzeigen der eingegebenen Daten in einem vorbestimmten Bereich innerhalb eines der Druckbilder (101-104, 221, 222);
Ermöglichen der Auswahl von einem der Druckbilder (101, 221, 222); und
Anzeigen einer Vergrößerung des ausgewählten Druckbildes (101, 221, 222).

7. Druckdateneditierprogramm nach Anspruch 6, das weiter verursacht, dass der Computer ausführt:
Anzeigen des Druckbildes in einem Bildanzeigebereich (110); und
Anzeigen der eingegebenen Daten in einem Eingabedatenanzeigebereicht (115).

8. Druckdateneditierprogramm nach einem der Ansprüche 6 oder 7, das weiter verursacht, dass der Computer ausführt Ändern der Menge der anzuzeigenden Druckbilder.

9. Druckdateneditierprogramm nach einem der Ansprüche 6 bis 8, das weiter verursacht, dass der Computer ausführt:
Auswählen von mindestens einem der Druckbilder; und
Erzeugen von Druckdaten entsprechend zu dem ausgewählten Druckbild.

10. Druckdateneditierprogramm nach einem der Ansprüche 6 bis 9, das weiter verursacht, dass der Computer ausführt Lesen von Daten aus einer Anordnung (221, 222) von eingegebenen Daten, die zuvor gespeichert sind, wobei in dem Schritt des Aktualisierens des Druckbildes das Druckbild aktualisiert wird, wenn neue Daten in dem Datenleseschritt gelesen werden.

## Revendications

1. Dispositif d'édition de données d'impression (1) qui est adapté à générer une image d'impression en appliquant un modèle à une donnée entrée et qui affiche l'image d'impression, comprenant :
- un moyen d'entrée (26, 28) pour entrer ladite donnée ;
- un moyen de mémoire de modèle (32) pour stocker une pluralité de modèles (101-104), indiquant chacun un format d'impression, pour imprimer ladite donnée entrée avec le moyen d'entrée (26, 28) ;
- un moyen d'affichage (24) pour afficher une pluralité d'images d'impression, chacune sur la base d'un modèle stocké dans le moyen de mémoire de modèle (32) ;
- un moyen de mise à jour d'image d'impression (20) pour mettre à jour toutes les images d'impression affichées sur le moyen d'affichage (24) pour des images d'impression sur lesquelles ladite donnée d'entrée est reflétée lorsque la donnée est entrée par le moyen d'entrée (26, 28) ; et
- un moyen de pointage (26, 28) pour pointer sur une région prédéterminée dans une image d'impression affichée dans le moyen d'affichage (24),
**caractérisé par** :
- un moyen de commande d'affichage pour commander l'affichage d'autres données entrées par le moyen d'entrée (26, 28) dans la région prédéterminée à l'intérieur de toutes les images d'impression indiquées par le moyen d'affichage (24) lorsque la région prédéterminée est pointée par le moyen de pointage (26, 28) et ladite autre donnée est entrée par le moyen d'entrée (26, 28),
- un moyen de sélection d'objet d'agrandissement (26, 28) pour sélectionner une des images d'impression affichées sur le moyen d'affichage (24) ; et
- un moyen d'agrandissement d'affichage (20) pour afficher une image d'impression agrandie sélectionnée par le moyen de sélection d'objet d'agrandissement (26, 28).

2. Dispositif d'édition de données d'impression selon la revendication 1, dans lequel le moyen d'affichage comprend une région d'affichage d'image (110) pour afficher une image d'impression à une région d'affichage de données d'entrée (115) pour afficher ladite donnée entrée avec le moyen d'entrée.

3. Dispositif d'édition de données d'impression selon l'une des revendications 1 ou 2, comprenant en outre un moyen de changement de quantité d'affichage pour changer la quantité d'image d'impression à afficher sur le moyen d'affichage (24).

4. Dispositif d'édition de données d'impression selon l'une des revendications 1 à 3, comprenant en outre :
- un moyen de sélection d'objet d'impression (26, 28) pour sélectionner au moins une des images d'impression affichées sur le moyen d'affichage (24) ; et
- un moyen de création de données d'impression (20) pour créer une donnée d'impression correspondant à une image d'impression sélectionnée par le moyen de sélection d'objet d'impression (26, 28).

5. Dispositif d'édition de données d'impression selon l'une des revendications 1 à 4, comprenant en outre un moyen de mémoire de données d'entrée (221, 222), dans lequel le moyen d'entrée (26, 28) est constitué d'un moyen de lecture (20) pour lire la donnée depuis le moyen de mémoire de données d'entrée (221, 222) et le moyen de mise à jour d'image d'impression est adapté à mettre à jour l'image d'impression lorsqu'une nouvelle donnée est lue par le moyen de lecture (20).

6. Programme d'édition de données d'impression stocké dans un support pouvant être lu par ordinateur, qui amène un ordinateur (1) à exécuter :
- l'affichage d'une pluralité d'image d'impression (101-104, 221, 222), chacune basée sur un modèle préparé de manière préliminaire (101-104) ; et
- la mise à jour de toutes les images d'impression (101-104, 221, 222) affichées vers les images d'impression (101-104, 221, 222) sur lesquelles la donnée entrée est reflétée lorsque la donnée est entrée ;
**caractérisé en ce que** le programme amène l'ordinateur (1) à exécuter :
- l'affichage de la donnée entrée dans une région prédéterminée à l'intérieur d'une des images d'impression (101-104, 221, 222) ;
- la permission de la sélection d'une des images d'impression (101, 221, 222) ; et
- l'affichage d'un agrandissement de l'image d'impression sélectionnée (101, 221,222).

7. Programme d'édition de données d'impression selon la revendication 6, qui amène en outre un ordinateur à exécuter :
- l'affichage de l'image d'impression dans une région d'affichage d'image (110) ; et
- l'affichage de la donnée entrée dans une région d'affichage de données d'entrée (115).

8. Programme d'édition de données d'impression selon une des revendications 6 ou 7, qui amène en outre un ordinateur à exécuter le changement de la quantité des images d'impression à afficher.

9. Programme d'édition de données d'impression selon une des revendications 6 à 8, qui amène en outre un ordinateur à exécuter :
- la sélection d'au moins une des images d'impression ; et
- la création de données d'impression correspondant à l'image d'impression sélectionnée.

10. Programme d'édition de données d'impression selon une des revendications 6 à 9, qui amène en outre un ordinateur à exécuter la lecture de données depuis un ensemble (221, 222) de données entrées précédemment stockées, dans lequel dans l'étape de mise à jour de l'image d'impression, l'image d'impression est mise à jour lorsqu'une nouvelle donnée est lue dans l'étape de lecture de données.
